# FASCICULE DE BREVET EUROPEEN

(11) **EP 1 068 621 B1**
(45) Date de publication et mention de la délivrance du brevet: **19.10.2005**
(21) Numéro de dépôt: 99910461.5
(22) Date de dépôt: 30.03.1999
(51) Int. Cl.: G21C 3/07

(54) **ALLIAGE ET TUBE POUR ASSEMBLAGE DE COMBUSTIBLE NUCLEAIRE ET PROCEDE DE FABRICATION D'UN TEL TUBE**
LEGIERUNG UND ROHR ZUM EINSATZ IN EINEM KERNBRENNSTABBÜNDEL UND HERSTELLUNGSVERFAHREN FÜR EIN DERARTIGES ROHR
ALLOY AND TUBE FOR NUCLEAR FUEL ASSEMBLY AND METHOD FOR MAKING SAME

(30) Priorité: 31.03.1998 FR 9803970
(43) Date de publication de la demande: 17.01.2001
(73) Titulaire: Framatome ANP, 92400 Courbevoie (FR)
(72) Inventeur: MARDON, Jean-Paul, F-69300 Caluire (FR); SENEVAT, Jean, F-44250 Saint Brevin les Pins (FR); CHARQUET, Daniel, 73400 Ugine Cedex (FR)
(74) Mandataire: Jacobson, Claude
(86) Numéro de dépôt international: PCT/FR1999/000737
(87) Numéro de publication internationale: WO 1999/050854

(56) Documents cités:
- EP-A- 0 552 098
- EP-A- 0 720 177
- WO-A-95/18874
- DE-A- 3 805 124
- FR-A- 2 576 322
- FR-A- 2 626 291
- FR-A- 2 723 965
- US-A- 4 049 431

## Description

La présente invention concerne les tubes en alliage à base de zirconium destinés à constituer la totalité ou la partie externe de la gaine d'un crayon de combustible nucléaire ou un tube guide, ainsi que les alliages pour constituer de tels tubes. Elle trouve une application particulièrement importante, bien que non exclusive, dans le domaine de la fabrication de tubes de gainage pour les crayons de combustible destinés à ceux des réacteurs à eau légère et notamment à eau sous pression dans lesquels les risques de corrosion sont particulièrement élevés, par suite d'une teneur forte en lithium et/ou de risques d'ébullition.

On a déjà proposé (FR A-2 729 000 ou EP 720 177) un procédé de fabrication de tubes permettant d'obtenir une bonne résistance à la corrosion et une tenue au fluage satisfaisante, en partant d'un lingot en alliage à base de zirconium contenant également 50 à 250 ppm de fer, 0,8 à 1,3% en poids de niobium, moins de 1600 ppm d'oxygène, moins de 200 ppm de carbone et moins de 120 ppm de silicium.

Le document FR-A-2 576 322 divulgue un alliage à base de zirconium pour du revêtements métalliques dans des réacteurs nucléaires.

La présente invention vise notamment à obtenir un alliage et un procédé permettant de fabriquer des tubes résistant encore davantage à la corrosion et dont la composition n'est pas de nature à gêner les étapes de laminage au cours de la fabrication.

Dans ce but, l'invention propose notamment un alliage à base de zirconium tel que défini à la revendication 1.

Un tel alliage, lorsqu'il est à faible teneur de fer, de chrome, de vanadium et d'étain, est également utilisable pour constituer des plaquettes de grille d'assemblage combustible nucléaire.

L'invention propose également un tube de gainage de crayon de combustible nucléaire ou un tube de guidage pour assemblage de combustible tel que défini à la revendication 3.

L'invention propose également un procédé de fabrication tel que défini à la revendication 8.

Le traitement thermique final amène le tube à l'état recristallisé sans modification de la nature des phases.

Une teneur en oxygène comprise entre 1000 et 1600 ppm est particulièrement avantageuse. Elle peut être ajustée par addition délibérée et contrôlée de zircone avant coulée.

Le plus souvent, on utilisera un alliage sans vanadium. Cependant le vanadium peut remplacer le chrome partiellement, ou même totalement pour un rapport Fe/Cr élevé.

La présence de fer à une teneur dépassant 75 ppm et de chrome et/ou vanadium à une teneur supérieure à 5 ppm conduit, dans les alliages à environ 1% de Nb, jusqu'à des teneurs en fer ne dépassant pas 0,20 %, à des composés inter-métalliques de type Zr (Nb, Fe, Cr)₂ ou Zr(Nb,Fe,V)₂. Le chrome est toujours présent pour constituer de tels composés dès que sa teneur dans l'alliage dépasse 5 ppm. L'existence du composé inter-métallique diminue la quantité de précipités de niobium en phase β et diminue également la teneur en niobium de la solution solide.

Les composés inter-métalliques ci-dessus, qui constituent une phase de Laves, précipitent sous forme très fine, avec une taille comprise entre 100 et 200 nanomètres. Ils se substituent aux précipités de phase β niobium. Ils améliorent considérablement la tenue en milieu lithié, sans influencer sensiblement la résistance à la corrosion uniforme à une température de 400°C, représentative de celle qui règne dans des réacteurs.

Il est spécifié de ne pas dépasser une teneur totale Fe+(Cr et/ou V) de 2500 ppm (c'est à dire 0,25% en poids), bien que des teneurs plus élevées restent bénéfiques du point de vue de la tenue en corrosion en milieu lithié. La raison en est qu'il apparaît alors, en plus de la phase de Laves, un précipité de type (Zr, Nb)₄Fe₂ dont le diamètre peut atteindre 1µm et qui est néfaste du point de vue de la laminabilité. Une teneur maximale de 0,20% constitue un compromis proche de l'optimum entre la corrosion en milieu lithié et la laminabilité.

La présence de chrome dans les précipités intermétalliques de type Zr (Nb, Fe, Cr)₂ n'a pas d'influence marquée sur la corrosion à 400°C jusqu'à un rapport Fe/Cr d'environ 30, car dans ce domaine il y a simplement substitution du chrome au fer dans les précipités intermétalliques au fur et à mesure de l'augmentation de la teneur en chrome. On peut limiter la teneur en Fe à 0,20% pour éviter que le fer excédentaire ne fasse apparaître une teneur trop élevée en phase (Zr, Nb)₄Fe₂. Une tenue améliorée à la corrosion à 400°C est obtenue lorsque le rapport Fe/(Cr+V) dépasse 0,5 et la somme Fe+Cr+V est d'au moins 0,03%.

Le tableau I ci-dessous montre l'effet de la teneur en fer sur le comportement à la corrosion d'un échantillon d'alliage de zirconium à 1% de niobium pour différentes teneurs en fer :

**TABLEAU I**

| Fe ppm | Gain de masse (mg/dm²) | |
|---|---|---|
| | eau lithiée à 70 ppm Li | phase vapeur |
| | 360°C - 28 jours (avec préfilmage) | 400°C - 262 jours |
| 120 | 2070 | 240 |
| 1480 | 1670 | 250 |
| 2920 | 315 | 240 |
| 4300 | 25 | 270 |

Les teneurs en C, Si, S, O₂ et Sn étaient sensiblement identiques pour tous les échantillons et étaient inférieures aux valeurs maximales données plus haut ; elles étaient inférieures à 300 ppm pour l'étain.

Le pré-filmage est constitué par une opération destinée à accélérer la réponse et la sélectivité du test de corrosion, cette opération permet de déterminer plus rapidement l'effet d'additifs sur la corrosion.

L'échantillon avait été fabriqué par des opérations thermo-métallurgiques comparables à celles données plus haut, c'est à dire en ne dépassant pas une température de 620°C.

L'influence du rapport Fe/Cr dans les précipités apparaît sur le tableau 2 ci-après, qui donne la prise de poids d'échantillons d'alliage après maintien de 200 jours dans la vapeur à une température de 400°C. On constate que la variation en fonction de Fe/Cr est relativement faible.

**TABLEAU II**

| Fe/Cr dans les précipités | Prise de poids en mg/dm² |
|---|---|
| 0,5 | 100 |
| 1 | 110 |
| 2 | 120 |
| 5 | 110 |
| 30 | 100 |

Des essais complémentaires ont montré que des résultats similaires sont obtenus en remplaçant le chrome par le vanadium. Les teneurs en chrome ou en vanadium sont choisies suffisamment faibles pour ne pas soulever de difficultés majeures lors des traitements métallurgiques et notamment des laminages.

A l'heure actuelle, la teneur en lithium de l'eau des réacteurs à eau sous pression ne dépasse pas quelques ppm. Il est dans ce cas avantageux de maintenir la teneur en étain à moins de 300 ppm. Une teneur plus élevée à un effet légèrement défavorable sur la tenue à la corrosion uniforme, dans la vapeur d'eau vers 415°C (alors que son effet sur la corrosion nodulaire dans la vapeur à 500°C est négligeable).

En revanche, l'addition d'étain à une teneur comprise entre 300 et 2000 ppm, et notamment entre 1000 et 1500 ppm, réduit notablement la corrosion en milieu aqueux aux teneurs élevées en lithium envisagées à l'heure actuelle pour la conduite des réacteurs. Au-delà de 1500 ppm, la tenue en milieu lithié ne s'améliore que faiblement par augmentation de la teneur en étain, de sorte qu'il sera rarement intéressant de dépasser une valeur de 1500 ppm d'étain.

Les effets ci-dessus apparaissent sur le tableau III ci-après :

**Tableau III -**

| Corrosion en autoclave | | | |
|---|---|---|---|
| Teneurs visées en étain % | Gain de masse (mg/dm²) | | |
| | Vapeur 1 jour à 500°C | Vapeur 105 jours à 415°C | gain de masse dans l'eau à 70 ppm de lithium au bout de 28 jours à 360°C, avec préchauffage en vapeur |
| 0,00 | 37 | 135 | 2560 |
| 0,05 | 43 | 141 | 2270 |
| 0,10 | 43 | 155 | 1200 |
| 0,15 | 42 | 165 | 580 |
| 0,25 | 44 | 173 | 280 |

Les essais du tableau III, ayant pour but de chercher l'influence de l'étain, ont porté sur un alliage à 1 % Nb, le fer, le chrome et le vanadium n'étant présents qu'à l'état d'impuretés. Ils montrent un effet favorable inattendu de l'étain en milieu lithié sans dégradation rédhibitoire en matière de corrosion en phase vapeur.

Les teneurs en C, Si, S, O₂ et Sn étaient sensiblement identiques pour tous les échantillons et étaient inférieures aux valeurs maximales données plus haut.

## Revendications

1. Alliage à base de zirconium contenant également, en poids, 0,03 à 0,25% au total de fer d'une part, de l'un au moins des éléments du groupe constitué du chrome et du vanadium d'autre part, la teneur en fer étant d'au moins 75 ppm et le total des teneurs en chrome et vanadium d'au moins 5 ppm, et le rapport Fe/(Cn+V) étant compris entre 0.5 et 30, 0,8 à 1,3% en poids de niobium, moins de 2000 ppm d'étain, 500 à 2000 ppm d'oxygène, moins de 100 ppm de carbone, de 5 à 35 ppm de soufre et moins de 50 ppm de silicium, le reste étant du Zr et les impuretés inévitables.

2. Alliage selon la revendication 1, **caractérisé en ce qu'**il contient au plus 0.20% de fer.

3. Tube de gainage de crayon de combustible nucléaire ou tube de guidage pour assemblage de combustible nucléaire, en alliage à base de zirconium contenant également, en poids, 0,03 à 0,25% au total de fer d'une part, de l'un au moins des éléments du groupe constitué du chrome et du vanadium d'autre part, la teneur en fer étant d'au moins 75 ppm et le total des teneurs en chrome et vanadium d'au moins 5 ppm, et le rapport Fe/(Cn+V) étant compris entre 0.5 et 30, 0,8 à 1,3% en poids de niobium, moins de 2000 ppm d'étain, 500 à 2000 ppm d'oxygène, moins de 100 ppm de carbone, de 5 à 35 ppm de soufre et moins de 50 ppm de silicium, à l'état recristallisé, dont le fer est en majeure partie au moins sous la forme Zr(Nb,Fe,Cr)₂ ou Zr(Nb,Fe,V)₂ et dont les composés intermétalliques ont une taille comprise entre 100 et 200 nm, le reste étant du Zr et les impuretés inévitables.

4. Tube selon la revendication 3, **caractérisé en ce que** la teneur en oxygène est comprise entre 1000 et 1600 ppm.

5. Tube selon la revendication 3 ou 4, **caractérisé en ce que** la teneur en étain est inférieure à 300 ppm.

6. Tube selon la revendication 3 ou 4, **caractérisé en ce que** la teneur en étain est comprise entre 300 et 1500 ppm.

7. Feuillard en alliage à base de zirconium, **caractérisé en ce que** sa composition est conforme à la revendication 1 ou 2.

8. Procédé de fabrication de tubes destinés à constituer la totalité ou la partie externe d'un tube de gainage de crayon de combustible nucléaire ou un tube guide pour assemblage de combustible nucléaire, **caractérisé en ce que** on constitue une barre en un alliage à base de zirconium contenant également, en poids, 0,03 à 0,25% au total de fer d'une part, de l'un au moins des éléments du groupe constitué du chrome et du vanadium d'autre part, la teneur en fer étant d'au moins 75 ppm et le total des teneurs en chrome et vanadium d'au moins 5 ppm, et le rapport Fe/(Cn+V) étant compris entre 0.5 et 30, 0,8 à 1,3% en poids de niobium, moins de 2000 ppm d'étain, 500 à 2000 ppm d'oxygène, moins de 100 ppm de carbone, de 5 à 35 ppm de soufre et moins de 50 ppm de silicium ; le reste étant du Zr et les impuretés inévitables;
- on trempe à l'eau la barre après chauffage entre 1000°C et 1200°C ;
- on file une ébauche après chauffage de 600°C à 800°C ;
- on lamine à froid, en au moins quatre passes, ladite ébauche pour obtenir un tube, avec des traitements thermiques intermédiaires entre 560°C et 620°C ; et
- on effectue un traitement thermique final entre 560°C et 620°C, l'ensemble des traitements thermiques étant effectué en atmosphère inerte ou sous vide.

9. Procédé selon la revendication 8, **caractérisé en ce que** l'alliage contient au plus 0,20% de fer.

10. Procédé selon l'une quelconque des revendications 8 ou 9, **caractérisé en ce que** la teneur en oxygène est comprise entre 1000 et 1600 ppm.

## Patentansprüche

1. Legierung auf Basis von Zirkonium, die außerdem, bezogen auf das Gewicht, enthält
insgesamt 0,03 bis 0,25 % Eisen einerseits und mindestens eines der Elemente aus der Gruppe Chrom und Vanadin andererseits,
wobei der Eisengehalt mindestens 75 ppm beträgt und der Gesamtgehalt an Chrom und Vanadin mindestens 5 ppm beträgt und das Verhältnis Fe/(Cr+V) zwischen 0,5 und 30 liegt,
0,8 bis 1,3 Gew.-% Niob,
weniger als 2000 ppm Zinn,
500 bis 2000 ppm Sauerstoff,
weniger als 100 ppm Kohlenstoff,
5 bis 35 ppm Schwefel und
weniger als 50 ppm Silicium,
Rest Zr und unvermeidliche Verunreinigungen.

2. Legierung nach Anspruch 1, **dadurch gekennzeichnet, dass** sie höchstens 0,20 Gew.-% Eisen enthält.

3. Umhüllungsrohr für ein Kernbrennelement oder Führungsrohr zum Assemblieren von Kernbrennstoff aus einer Legierung auf Basis von Zirkonium, die außerdem, bezogen auf das Gewicht, enthält
insgesamt 0,03 bis 0,25 % Eisen einerseits und mindestens eines der Elemente aus der Gruppe Chrom und Vanadin andererseits,
wobei der Eisengehalt mindestens 75 ppm beträgt und der Gesamtgehalt an Chrom und Vanadin mindestens 5 ppm beträgt und das Verhältnis Fe/(Cr+V) zwischen 0,5 und 30 liegt,
0,8 bis 1,3 Gew.-% Niob,
weniger als 2000 ppm Zinn,
500 bis 2000 ppm Sauerstoff,
weniger als 100 ppm Kohlenstoff,
5 bis 35 ppm Schwefel und
weniger als 50 ppm Silicium,
Rest Zr und unvermeidliche Verunreinigungen
im rekristallisierten Zustand, in der das Eisen zumindest zum größeren Teil vorliegt in Form von Zr(Nb, Fe, Cr)₂ oder Zr(Nb, Fe, V)₂ und
in der die intermetallischen Verbindungen eine Korngröße zwischen 100 und 200 nm aufweisen,

4. Rohr nach Anspruch 3, **dadurch gekennzeichnet, dass** der Sauerstoffgehalt zwischen 1000 und 1600 ppm liegt.

5. Rohr nach Anspruch 3 oder 4, **dadurch gekennzeichnet, dass** der Zinngehalt weniger als 300 ppm beträgt.

6. Rohr nach Anspruch 3 oder 4, **dadurch gekennzeichnet, dass** der Zinngehalt zwischen 300 und 1500 ppm liegt.

7. Band aus einer Legierung auf Basis von Zirkonium, **dadurch gekennzeichnet, dass** ihre Zusammensetzung derjenigen des Anspruchs 1 oder 2 entspricht.

8. Verfahren zur Herstellung von Rohren, die als Umhüllungsrohr für ein Kernbrennelement oder den äußeren Teil desselben, oder als Führungsrohr für das Assemblieren von Kernbrennstoff dienen sollen, **dadurch gekennzeichnet, dass** man einen Stab aus einer Legierung auf Basis von Zirkonium herstellt, die außerdem, bezogen auf das Gewicht, enthält
insgesamt 0,03 bis 0,25 % Eisen einerseits und mindestens eines der Elemente aus der Gruppe Chrom und Vanadin andererseits,
wobei der Eisengehalt mindestens 75 ppm beträgt und der Gesamtgehalt an Chrom und Vanadin mindestens 5 ppm beträgt und das Verhältnis Fe/(Cr+V) zwischen 0,5 und 30 liegt,
0,8 bis 1,3 Gew.-% Niob,
weniger als 2000 ppm Zinn,
500 bis 2000 ppm Sauerstoff,
weniger als 100 ppm Kohlenstoff,
5 bis 35 ppm Schwefel und
weniger als 50 ppm Silicium,
Rest Zr und unvermeidliche Verunreinigungen;
den Stab nach dem Erwärmen auf eine Temperatur zwischen 1000 und 1200 °C mit Wasser abschreckt;
- nach dem Erwärmen auf 600 bis 800 °C durch Strangpressen einen Rohling daraus herstellt;
- den genannten Rohling in mindestens vier Arbeitsgängen (Stichen) kalt auswalzt zur Herstellung eines Rohres unter gleichzeitiger Durchführung von thermischen Zwischenbehandlungen zwischen 560 und 620 °C; und
- eine thermische Schlussbehandlung zwischen 560 und 620 °C durchführt,
wobei die Gesamtheit der thermischen Behandlungen in einer inerten Atmosphäre oder unter Vakuum durchgeführt wird.

9. Verfahren nach Anspruch 8, **dadurch gekennzeichnet, dass** die Legierung höchstens 0,20 Gew.-% Eisen enthält.

10. Verfahren nach einem der Ansprüche 8 oder 9, **dadurch gekennzeichnet, dass** der Sauerstoffgehalt zwischen 1000 und 1600 ppm liegt.

## Claims

1. Alloy based on zirconium also containing, by weight, 0.03 to 0.25% in total of iron on the one hand, of at least one of the elements from the group consisting of chrome and vanadium on the other hand, with the content in iron being at least 75 ppm and the total contents in chromium and vanadium at least 5 ppm, and the ratio Fe/(Cn + V) being between 0.5 and 30, 0.8 to 1.3% by weight of niobium, less than 2000 ppm of tin, 500 to 2000 ppm of oxygen, less than 100 ppm of carbon, between 5 and 35 ppm of sulphur and less than 50 ppm of silicon, with the remainder being Zn and the unavoidable impurities.

2. Alloy in accordance with claim 1, **characterised by** the fact that it contains 0.20% of iron at the most.

3. Nuclear fuel rod cladding tube or cladding tube for nuclear fuel assembly, in a zirconium-based alloy also containing, by weight, 0.03 to 0.25% in total of iron on the one hand, at least one of the elements from the group consisting of chromium and vanadium on the other hand, with the content in iron being at least 75 ppm and the total contents in chromium and vanadium at least 5 ppm, and the ratio Fe/(Cn + V) being between 0.5 and 30, 0.8 to 1.3% by weight of niobium, less than 2000 ppm of tin, 500 to 2000 ppm of oxygen, less than 100 ppm of carbon, between 5 and 35 ppm of sulphur and less than 50 ppm of silicon, in the recrystallised state, of which iron is in the majority at least in the form Zn(Nb,Fe,Cr)₂ or Zn(Nb,Fe,V)₂ and whose intermetallic compounds have a size of between 100 and 200 nm, with the remainder being Zn and the unavoidable impurities.

4. Tube in accordance with claim 3, **characterised by** the fact that the content in oxygen is between 1000 and 1600 ppm.

5. Tube in accordance with claim 3 or 4 **characterised by** the fact that the content in tin is lower than 300 ppm.

6. Tube in accordance with claim 3 or 4, **characterised by** the fact that the content in tin is between 300 and 1500 ppm.

7. Strip made of an alloy based on zirconium, **characterised by** the fact that its composition complies with claim 1 or 2.

8. Process for manufacturing tubes intended to constitute all or the external part of a nuclear fuel rod cladding rube or a cladding tube for nuclear fuel assembly, **characterised by** the fact that a bar is made of an alloy based on zirconium also containing, by weight, 0.03 to 0.25% in total of iron, on the one hand, of at least one of the elements from the group consisting of chrome and vanadium on the other hand, with the content in iron being at least 75 ppm and the total contents in chromium and vanadium at least 5 ppm, and the ratio Fe/(Cn + V) being between 0.5 and 30, 0,8 to 1.3% by weight of niobium, less than 2000 ppm of tin, 500 to 2000 ppm of oxygen, less than 100 ppm of carbon, between 5 and 35 ppm of sulphur and less than 50 ppm of silicon, with the remainder being Zn and the unavoidable impurities;
the bar is soaked in water after heating to between 1000°C and 1200°C;
a specimen is extruded after heating to between 600°C and 800°C;
the aforementioned specimen is cold laminated in at least four passes in order to obtain a tube, with intermediate heat treatment at between 560°C and 620°C; and
a final heat treatment is carried out between 560°C and 620°C, with all the heat treatments being carried out in an inert atmosphere or under vacuum.

9. Process in accordance with claim 8, **characterised by** the fact that the alloy contains 0.20% iron at the most

10. Process in accordance with any one of claims 8 or 9, **characterised by** the fact that the oxygen content is between 1000 and 1600 ppm.
